# EUROPÄISCHE PATENTSCHRIFT

(11) **EP 3 705 634 B1**
(45) Veröffentlichungstag und Bekanntmachung des Hinweises auf die Patenterteilung: **18.09.2024**
(21) Anmeldenummer: 20160663.9
(22) Anmeldetag: 03.03.2020
(51) Int. Cl.: E03B 7/07

(54) **VENTIL FÜR DIE TRINKWASSERINSTALLATION**
VALVE FOR DRINKING WATER INSTALLATION
SOUPAPE POUR L'INSTALLATION D'EAU POTABLE

(30) Priorität: 08.03.2019 DE 202019001118 U
(43) Veröffentlichungstag der Anmeldung: 09.09.2020
(73) Patentinhaber: Gebr. Kemper GmbH + Co. KG, 57462 Olpe (DE)
(72) Erfinder: Fries, Stefan, 57462 Olpe (DE); Blumenthal, Roland, 50374 Erftstadt (DE); Vogt, Alexander, 57439 Attendorn (DE)
(74) Vertreter: Grünecker Patent- und Rechtsanwälte PartG mbB

(56) Entgegenhaltungen:
- EP-A1- 2 546 718
- EP-A2- 1 947 395
- DE-A1- 102011 010 840
- DE-A1- 102016 119 572
- DE-A1- 102017 110 343
- DE-U1- 20 109 619

## Beschreibung

Die vorliegende Erfindung betrifft ein Ventil für die Trinkwasserinstallation gemäß den oberbegrifflichen Merkmalen von Anspruch 1. Ein solches Ventil ist aus DE 10 2011 010 840 A1 bekannt.

Die vorliegende Erfindung betrifft insbesondere ein Ventil für die Regelung einer Kaltwasserzirkulation. So ist in dem Ventilgehäuse ein Strömungsweg für das Trinkwasser gebildet, in dem ein thermisches Dehnstoffelement freiliegt, das unter Vorspannung eines Federelementes gegen einen Regulierkolben angelegt ist. Durch die Dehnung des Dehnstoffelementes wird der Regulierkolben relativ zu einer Bohrung bewegt. Hierdurch erfolgt eine temperaturgesteuerte Regulierung der Strömung durch das Ventil. Diese Durchströmung des Ventils erfolgt mit dem Ziel, bei Trinkwasser mit geringer Temperatur ein Kv min einzustellen, sodass bei hinreichend kaltem Trinkwasser nur eine minimale Zirkulation erfolgt. Andererseits soll bei sich erwärmendem Trinkwasser die Zirkulation durch das Ventil erhöht werden, um das warme Trinkwasser möglichst zügig aus dem dem Ventil zugeordneten Leitungsabschnitt auszuleiten und über eine Zirkulationsleitung, die üblicherweise mit einer Pumpe versehen ist, einer Kühlung zuzuführen, wie dies beispielsweise in EP 2 487 301 B1 beschrieben ist. Die dort beschriebenen Einbausituationen gelten auch für denkbare Einbausituationen des Ventils nach der vorliegenden Erfindung.

Das aus DE 10 2011 010 840 A1 vorbekannte Ventil zur Steuerung einer Kaltwasserzirkulation lässt noch Wünsche offen. Denn die dort beschriebene Lösung entspricht einem üblichen Ventil für die Regulierung einer Warmwasserzirkulation, die seit langem bekannt ist, lediglich mit dem Unterschied, dass das Verhalten des Dehnstoffelementes so genutzt wird, dass mit steigender Wassertemperatur der Strömungsdurchlass vergrößert und nicht wie bei thermischen Regulierventilen für die Warmwasserzirkulation verkleinert wird. Ansonsten werden aber die Konstruktionsprinzipien von Warmwasser-Regulierventilen identisch übernommen. Diese werden aber den Anforderungen einer Zirkulation in einem Kaltwassersystem nur unzureichend gerecht.

Der vorliegenden Erfindung liegt das Problem zugrunde, ein insofern verbessertes Ventil für die Trinkwasserinstallation anzugeben, das in Abhängigkeit von einer einstellbaren oder fest eingestellten Temperatur bei einer gegenüber dieser Temperatur erhöhten Wassertemperatur einen größeren Volumenstrom des Kaltwassers erlaubt und bei niedriger Temperatur den Durchfluss bevorzugt auf einen minimalen Volumenstrom einregelt.

Zur Lösung dieses Problems wird mit der vorliegenden Erfindung ein Ventil mit den Merkmalen von Anspruch 1 vorgeschlagen. Eine alternative Lösung ist in Anspruch 5 angegeben. Beide Aspekte in Kombination ergeben ein für die Kaltwasserzirkulation bestmöglich angepasst ausgebildetes Ventil.

Nach der in Anspruch 1 definierten Lösung kann das Ventil einen sehr geringen Volumenstrom bei Kv Min von etwa 0,05 m³/h +/- 0,01 m³/h einstellen. In Abkehr von üblichen Regulierventilen wird dabei der Regulierspalt nicht in Umfangsrichtung als Ringspalt ausgebildet. Vielmehr ist zwischen der Außenumfangsfläche des Regulierkolbens und der üblicherweise gehäusefest vorgesehenen Bohrung ein sich radial erstreckender Spalt, der umfänglich nicht durchgehend ausgebildet. Durch diesen Spalt wird ein Kv min Strömungsdurchlass ausgebildet. Der Strömungsdurchlass wird ausgebildet, wenn der Regulierkolben mit seinem Kv min-Einstellungsbereich auf Höhe der Bohrung befindlich ist. Diese Lage des Kv min-Einstellungsbereiches wird als Kv min-Stellung bezeichnet.

Ein sehr geringer Kv min Strömungsdurchlass wird durch einen einzigen sich radial erstreckenden Spalt gebildet. Selbstverständlich können auch mehrere sich radial erstreckende Spalte vorgesehen sein, die jeweils in Umfangsrichtung nicht durchgehend ausgebildet sind. Der Spalt erstreckt sich dabei üblicherweise um wenige Grad in Umfangsrichtung, beispielsweise um zwischen 2 und 8°.

Der Kv min-Einstellungsbereich des Regulierkolbens ist dabei durch einen gewissen sich in axialer Richtung erstreckenden Bereich des Kolbens ausgebildet, der in der Kv min-Stellung innerhalb der Bohrung liegt.

Benachbart zu dem Kv min-Einstellungsbereich bildet der Regulierkolben üblicherweise eine Außenumfangsfläche aus, die mit zunehmender Erwärmung des Trinkwassers und damit Dehnung des Dehnstoffelementes zunehmend Kaltwasser durch den Regulierspalt hindurchlässt. So wird der Strömungsdurchlass zwischen dem Regulierkolben und der Bohrung vergrößert, um warmes, abgestandenes Wasser abzufördern.

Der Regulierkolben hat in seinem Kv min-Einstellungsbereich üblicherweise ein Kunststoff-Dichtelement, dessen Außenumfangsfläche in der Kv min-Stellung des Regulierkolbens den Spalt definiert. Dieses Kunststoff-Dichtelement kann mit seiner Außenumfangsfläche zumindest teilumfänglich an einer die Bohrung vorgebenden, üblicherweise gehäusefest vorgesehenen Gegenfläche anliegen und den Regulierspalt zumindest überwiegend umfänglich abdichten. Als zumindest überwiegend umfängliche Abdichtung wird eine Abdichtung von zumindest 330°, bevorzugt zumindest 350° der umfänglichen Erstreckung der Bohrung angesehen. Gemäß einer bevorzugten Weiterbildung der vorliegenden Erfindung hat der Regulierkolben in seinem Kv min-Einstellungsbereich ein Kunststoff-Dichtelement, das einen in der Kv min-Stellung des Regulierkolbens den Regulierspalt ausbildenden Radialschlitz hat. Dieses Kunststoff-Dichtelement kann mit radialer Vorspannung an der Gegenfläche anliegen. Eine das Dichtelement abstützende Stützfläche, die durch eine Regulierkolbenbasis gebildet sein kann und/oder die Innenumfangsfläche der Bohrung können konisch ausgebildet sein, sodass mit zunehmender Annäherung an die Kv min-Stellung das ringförmige Kunststoff-Dichtelement im Schlitzbereich komprimiert und damit der Strömungsdurchlass verengt wird. Es sollte keine durch das Dehnstoffelement stellbare Position möglich sein, bei welcher der Strömungsdurchlass vollständig verlegt bzw. unmöglich gemacht worden ist.

Nach der erfindungsgemäßen Ausgestaltung, die in Verbindung mit der Ausformung des zuvor diskutierten Kv min-Einstellungsbereiches an dem Regulierkolben wirkt, hat dieser zusätzlich einen Kv max-Einstellungsbereich. In diesem Kv max-Einstellungsbereich des Regulierkolbens sind an der Außenumfangsfläche des Regulierkolbens Stützstellen ausgebildet. Zwischen diesen Stützstellen liegen Strömungsdurchgangsmulden. Dementsprechend wechseln sich Stützstellen und Strömungsdurchgangsmulden in Umfangsrichtung auf Höhe des Kv max-Einstellungsbereiches ab. In einer Kv max-Stellung des Regulierkolbens reichen die Stützstellen bis zu der Bohrung. Dadurch ergibt sich eine Führung und Abstützung des Kolbens in der Kv max-Stellung. In diesem Zusammenhang ist zu beachten, dass das Federelement zur Verspannung des Regulierkolbens in Richtung auf die Spindel unter Zwischenlage des Dehnstoffelementes in der Kv max-Stellung üblicherweise erheblich komprimiert ist und der Regulierkolben unmittelbar oder mittelbar über das Dehnstoffelement nur unzureichend gegenüber der Spindel axial geführt und lediglich dagegen unmittelbar oder mittelbar stirnseitig abgestützt ist. So bewirken die Stützstellen eine gewisse Führung des Regulierkolbens in der Kv max-Stellung. Dabei müssen die Stützstellen nicht nach Art einer Passung ausgebildet sein. Die Stützstellen können eine Hüllfläche definieren, die geringfügig kleiner als die Innenumfangsfläche der Bohrung ist. Allerdings liegen üblicherweise zumindest zwei Stützstellen an der durch die Bohrung vorgegebenden Gegenfläche an, sodass der Regulierkolben in der Kv max-Stellung durch das die Bohrung üblicherweise definierende Gehäuse gestützt und geführt ist.

Gemäß einer bevorzugten Weiterbildung der vorliegenden Erfindung befindet sich der Kv max-Einstellungsbereich an dem Regulierkolben zwischen dem Kv min-Einstellungsbereich und der Spindel. Ausgehend von der Spindel bildet der Regulierkolben dementsprechend zunächst den Kv max-Einstellungsbereich, im Anschluss daran einen Reguliereinstellungsbereich zum Regulieren des Strömungsdurchlasses aufgrund der Dehnung des Dehnstoffelementes und einen Kv min-Einstellungsbereich zur Einstellung des Kv min-Strömungsdurchlasses aus. Dieser Einstellungsbereich gibt üblicherweise auch die höchste Position des Regulierkolbens im Rahmen seiner Bewegung innerhalb des Ventilgehäuses an. In dieser höchsten Position liegt der Regulierkolben maximal nahe an einem Kopf des Ventils, der von der Spindel durchragt ist. Der bodenseitige Abstand ist in der höchsten Position dementsprechend am größten.

Gemäß einer bevorzugten Weiterbildung der vorliegenden Erfindung ist die Spindel in einem Ventileinsatzgehäuse drehbar gelagert. Dieses Ventileinsatzgehäuse bildet zumindest einen zu dem Dehnstoffelement führenden ersten radialen Strömungsdurchlass aus. Dieser erste radiale Strömungsdurchlass kann Einlassöffnung oder Auslassöffnung zu einem Strömungsweg innerhalb des Ventileinsatzgehäuses sein, in dem das Dehnstoffelement freiliegt. An dem der Spindel gegenüberliegenden Ende ist das Ventileinsatzgehäuse gemäß der bevorzugten Weiterbildung der vorliegenden Erfindung mit einer Einlasshülse verbunden, die üblicherweise dichtend mit dem Ventileinsatzgehäuse verbunden, regelmäßig verschraubt ist, und einen zweiten radialen Strömungsdurchlass ausformt, der durch die andere von Einlass- und Auslassöffnung zu dem Strömungsweg gebildet ist. Bevorzugt bildet die Einlasshülse dabei den Einlass der Strömung zu dem Dehnstoffelement aus. Die Einlasshülse bildet ferner einen Boden aus, an dem sich das Federelement mit seinem freien unteren Ende abstützt.

Diese Ausgestaltung bietet gegenüber der aus DE 10 2011 010 840 A1 bekannten Lösung den Vorteil, dass die Strömung radial einfließt und nicht - wie bei dem zuvor erwähnten Stand der Technik - durch das Federelement eintritt und erst die Federgänge radial passieren muss, um zu dem Dehnstoffelement zu gelangen. Es sind Fallgestaltungen denkbar, bei denen die Federwindungen relativ eng aufeinanderliegen. In diesem Fall kann die Strömung nicht ungehindert durch das Ventileinsatzgehäuse fließen.

Gemäß einer bevorzugten Weiterbildung der vorliegenden Erfindung bildet die Einlasshülse vorzugsweise einen Stützkragen aus, an dem sich das Federelement innen abstützt. Bei der Feder handelt es sich um eine Schraubenfeder. Der Stützkragen verhindert ein Knicken des Federelements und führt außenseitig die Schraubenfeder. Der Stützkragen wird dabei bevorzugt durch eine Federstützhülse ausgebildet, die axial beweglich relativ zu dem Ventileinsatzgehäuse gehalten ist, bevorzugt innerhalb der Einlasshülse axial in Grenzen beweglich gehalten ist. Dabei bildet die Einlasshülse zumindest einen endseitigen Anschlag aus, an den die Federstützhülse vor der Montage aufgrund der Vorspannung des Federelementes anliegt, sodass das Ventileinsatzgehäuse zusammen mit der Einlasshülse und der Federstützhülse als Einheit gehandhabt und in das Ventilgehäuse eingeschraubt werden können.

Vorzugsweise stützt sich die Federstützhülse in der Einbausituation an dem Ventilgehäuse ab. Dadurch werden Toträume und dergleichen vermieden, die zwischen dem unterseitig geschlossenen Boden der Einlasshülse und der gegenüberliegenden und das Ventilgehäuse bildenden Wandung entstehen könnten.

Nach einer weiteren bevorzugten Ausgestaltung ist ein Ventilteller vorgesehen, der eine Dichtscheibe trägt, die in einer Verschlussstellung des Ventils an einem benachbart zu der Bohrung vorgesehenen Dichtsitz anliegt. Der Ventilteller stützt dabei bevorzugt das Dehnstoffelement ab. Der Ventilteller befindet sich dementsprechend zwischen der Spindel und dem Dehnstoffelement und wird üblicherweise bevorzugt unmittelbar von dem spindelseitigen Ende des Dehnstoffelementes kontaktiert.

Gemäß einer bevorzugten Ausgestaltung der vorliegenden Erfindung ist ein in Wirkverbindung mit der Spindel stehender motorischer Antrieb vorgesehen. Dieser motorische Antrieb eignet sich insbesondere zum Einstellen von Kv max. Kv max des erfindungsgemäßen Ventils erlaubt insbesondere ein Spülen der dem Ventil zugeordneten Leitungsabschnitte. Kv max wird dabei so eingestellt, dass bei den üblichen Systemdrücken ein Volumenstrom von 1,8 m³/h +/- 0,5 m³/h eingestellt werden kann. Eine solche Regelungscharakteristik lässt sich nicht allein durch die Dehnung des Dehnstoffelementes einstellen. Vielmehr wird Kv max bei dem erfindungsgemäßen Ventil bevorzugt durch den motorischen Antrieb eingestellt. Dieser hat hierzu eine Steuerung, die einen Speicher enthält, in den zumindest ein vorbestimmtes Spülregime hinterlegt ist. Die Steuerung ist dabei so eingerichtet, dass der motorische Antrieb den Regulierkolben von einer voreingestellten Regulierstellung in die Kv max-Stellung zum Spülen stellt, bevorzugt nach Art eines Stößels axial vorschiebt. Die voreingestellte Regulierstellung ist dabei eine Stellung des Regulierkolbens, bei welchem der Reguliereinstellungsbereich oder der Kv min-Einstellungsbereich innerhalb der Bohrung liegt. Die Steuerung ist ferner so eingestellt, dass nach Beendigung des Spülens der Regulierkolben durch Antrieb des motorischen Antriebs in die voreingestellte Regulierstellung zurückgestellt wird. Dabei wirkt der motorische Antrieb üblicherweise mit der Spindel zusammen, die zwar auch noch unabhängig von dem Motor und händisch gedreht und damit verstellt werden kann.

Im Hinblick auf eine kompakte und für sich funktionsfähige Lösung ist der motorische Antrieb, die Steuerung und der Speicher bevorzugt in einem einheitlichen, bevorzugt mit dem Ventilgehäuse verdrehfest verbundenen Antriebsgehäuse aufgenommen. Die Verbindung zwischen dem Ventilgehäuse und einem solchen Antrieb kann beispielsweise gemäß der auf die hiesige Anmelderin zurückgehenden DE 20 2006 013 186 U1 erfolgen.

Bei dem erfindungsgemäßen Ventil ist der Regulierkörper in dem Kv min-Einstellungsbereich unter Beibehaltung eines konstanten Volumenstromes in Grenzen in der gehäuseseitigen Bohrung axial beweglich. Der Kv min Strömungsdurchlass hat dementsprechend über eine gewisse axiale Erstreckung einen konstanten Strömungsquerschnitt. Entsprechendes gilt für den Kv max-Einstellungsbereich und den Kv max Strömungsdurchlass.

Die vorliegende Erfindung wird nachstehend anhand eines Ausführungsbeispiels in Verbindung mit der Zeichnung erläutert. In dieser zeigen:
- Figur 1: eine Längsschnittansicht eines Ausführungsbeispiels eines erfindungsgemäßen Ventils;
- Figur 2: ein vergrößertes Detail der Schnittansicht gemäß Figur 1;
- Figur 3: eine perspektivische Seitenansicht des Ventileinsatzes gemäß Figur 1;
- Figur 4: eine Längsschnittansicht eines alternativen Ventileinsatzes;
- Figur 5: ein vergrößertes Detail des Ausführungsbeispiels nach Figur 1;
- Figur 6: eine Querschnittsansicht entlang der Linie VI-VI für eine erste Variante zur Ausgestaltung des Kv min-Einstellungsbereiches;
- Figur 7: eine gegenüber Figur 6 abgewandelte zweite Variante;
- Figur 8: das zweite Ausführungsbeispiel in einer Spülstellung;
- Figur 9: eine Querschnittsansicht entlang der Schnittlinie IX-IX gemäß Figur 8
- Figur 10: eine Längsschnittansicht des zweiten Ausführungsbeispiels in einer Geschlossenstellung und
- Figur 11: das in Figur 1 gezeigte Ausführungsbeispiel in einer perspektivischen Seitenansicht mit einer Antriebseinheit.

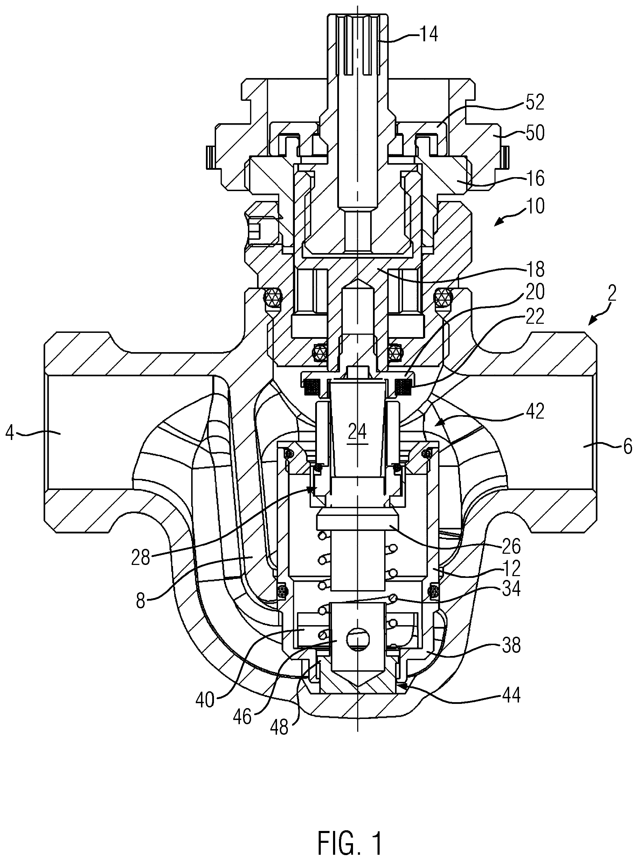

Die Figur 1 zeigt ein Ausführungsbeispiel eines Ventils mit einem Ventilgehäuse 2, welches eine Einlassöffnung 4 und eine Auslassöffnung 6 ausbildet. In dem Ventilgehäuse 2 ist eine Trennwand 8 vorgesehen, die eine Bohrung definiert, in die ein Ventileinsatz 10 dichtend eingesetzt ist.

Der Ventileinsatz 10 hat ein Ventileinsatzgehäuse 12, in dem eine Spindel 14 drehbar gelagert ist, die über ein Regulieroberteil 16, welches mit dem Ventileinsatzgehäuse 12 verschraubt ist, gelagert ist. Das Regulieroberteil 16 hat Vorsprünge, die einen Teil der Spindel 14 übergreifen und dementsprechend die Spindel 14 axial gegenüber dem Ventiloberteil 16 festlegen. Das Ventiloberteil 16 ist innerhalb des Ventileinsatzgehäuses 12 verschraubt und kann dort verstellt werden, wodurch eine Voreinstellung der Spindel 14 möglich ist.

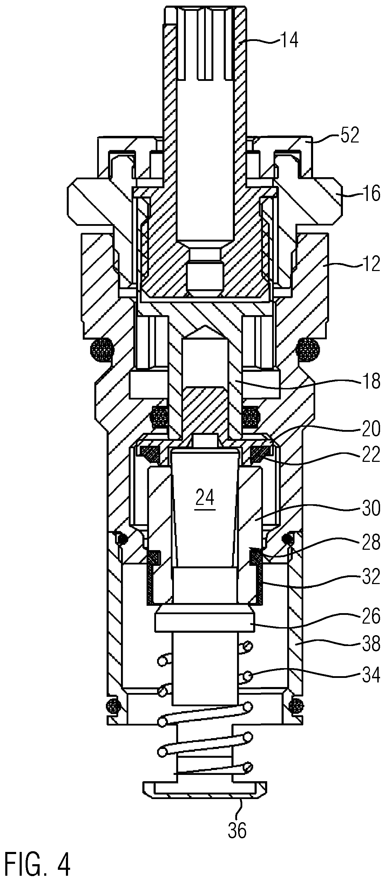

Die Spindel 14 ist eine nichtsteigende Spindel, die mit einem Stellelement 18 im Eingriff ist, welches auf der gegenüberliegenden Seite mit einem Ventilteller 20 zusammenwirkt, der mit einem Nocken in eine Ausnehmung des Stellelementes 18 eingreift. An der dem Stellelement 18 gegenüberliegenden Unterseite trägt der Ventilteller 20 eine Dichtscheibe 22, die ein Dehnstoffelement 24 umfänglich umgibt. Das Dehnstoffelement 24 hat einen zentrischen Zapfen, der in eine korrespondierend hierzu ausgebildete, leicht konisch auslaufende Einsatzbohrung des Ventiltellers 20 eingreift. Das Dehnstoffelement 24 hat einen Anlagekragen 26, an den ein Regulierkolben 28 anliegt. Dieser Regulierkolben 28 besteht aus einer metallischen Regulierkolbenbasis 30 und einem aus Kunststoff gebildeten Kunststoff-Dichtelement 32, vgl. Figur 4. An der dem Regulierkolben 28 gegenüberliegenden Seite liegt ein Federelement 34 unter Vorspannung gegen das Dehnstoffelement 24 an. Das andere Ende des Federelementes 34 stützt sich an einer Anlagefläche 36 einer mit Bezugszeichen 38 gekennzeichneten Einlasshülse ab. Diese Einlasshülse 38 definiert einander gegenüberliegende Ventileinsatz-Einlassöffnungen 40, durch die das zu regulierende Kaltwasser zu dem Dehnstoffelement 24 gelangt. Mit Bezugszeichen 42 sind Ventileinsatz-Auslassöffnungen gekennzeichnet, durch die die Strömung aus dem Ventileinsatz 10 herausströmt.

Wie insbesondere Figur 4 erkennen lässt, ist die Einlasshülse 38 mit dem Ventileinsatzgehäuse 12 dort verschraubt. Eine Dichtung dichtet die Schraubverbindung ab. An seinem unteren Ende weist die Einlasshülse 38 einen weiteren Dichtring auf, der den Ventileinsatz 10 gegenüber der in der Trennwand 8 ausgesparten Bohrung abdichtet. Bei dem Ausführungsbeispiel nach Figur 1 ist die Einlasshülse 38 an dem Ventileinsatzgehäuse 12 als Segment eines einheitlichen Bauteils angeformt.

Bei den Ausführungsbeispielen nach den Figuren 1 bis 3 stützt sich das Federelement 34 unterseitig an einer Federstützhülse 44 ab, die zur Vermeidung von Toträumen an ihrem Außenumfang mit zumindest zwei einander gegenüberliegenden Bohrungen versehen ist. Diese Bohrungen befinden sich im Bereich eines Stützkragens 46, der das als Schraubenfeder ausgebildete Federelement 34 umfänglich stützt. Der Stützkragen 46 überragt einen Stützring 48, gegen den das Federelement 34 endseitig anliegt und der einen radial nach außen vorspringenden Verriegelungsvorsprung ausformt, der axial beweglich ist und in seiner Bewegung nach unten durch einen Anschlag begrenzt ist. So kann die Federstützhülse 44 in Grenzen axial relativ zu dem Ventileinsatz 10 bewegt werden.

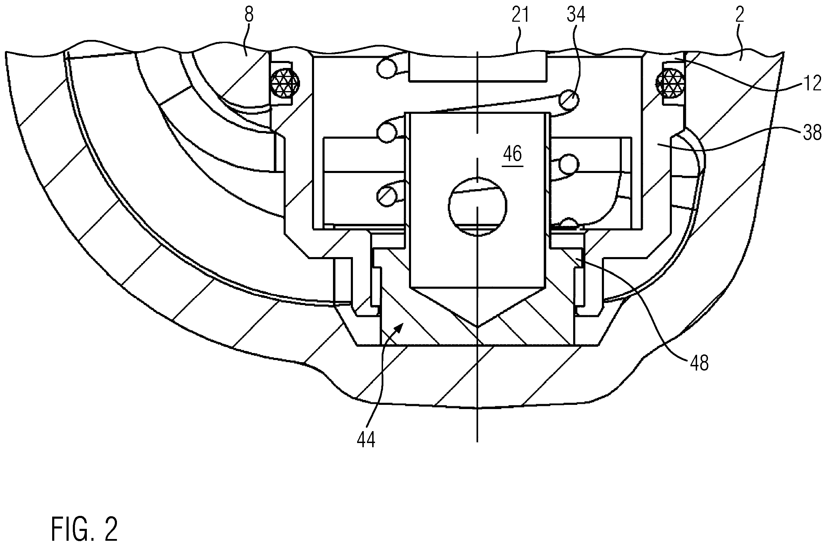

Wie ersichtlich wird diese Beweglichkeit dazu genutzt, in der Einbausituation des Ventileinsatzes 10 die Federstützhülse 44 an dem Ventilgehäuse 2 abzustützen und daran anzulegen. So kann die Federstützhülse 44 unterseitig offen oder - wie Figur 2 verdeutlicht - unterseitig geschlossen ausgebildet sein.

Der Stützkragen 46 hat einen Innendurchmesser, der zur Aufnahme des freien Endes des Dehnelementes 24 angepasst ausgebildet ist.

An dem gegenüberliegenden Ende des Ventileinsatzes 10 ist ein verdrehfest mit dem Stellelement 18 vorgesehenes Einstellrad 50 vorgesehen, das mit einer Skalierung 52 zusammenwirkt, um einen Kv min-Wert voreinzustellen und den voreingestellten Wert über die Skalierung 52 anzuzeigen, die gegenüber der mit einer entsprechenden Markierung versehenen Spindel bei der Voreinstellung verdreht wird. Das Einstellrad 50 kann aber auch als Motoradapter für eine die Spindel 14 stellende Antriebseinheit genutzt werden.

Die Figur 4 zeigt ein gegenüber dem Ausführungsbeispiel nach den Figuren 1 bis 3 leicht abgewandeltes Ausführungsbeispiel. Dieses unterscheidet sich im Wesentlichen lediglich durch die Gestaltung eines die Anlagefläche für das Federelement bildenden Bodens 36, der hier flach ausgebildet ist und nicht mit dem Ventilgehäuse 2 in der Einbausituation zusammenwirkt. Gleiche Bauteile sind gegenüber dem zuvor diskutierten Ausführungsbeispiel mit gleichen Bezugszeichen gekennzeichnet.

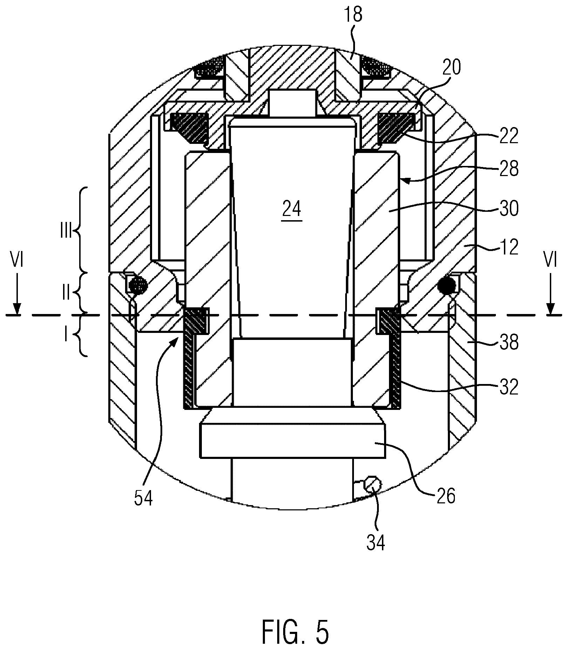

Die Figur 5 zeigt den Regulierkolben 28 in seiner Kv min-Stellung und gilt auch für das erste Ausführungsbeispiel. In dieser Stellung wirkt die Außenumfangsfläche des Kunststoff-Dichtelementes 32 als nahezu vollständige umfängliche Abdichtung in einer durch das Ventileinsatzgehäuse 12 definierten Bohrung 54.

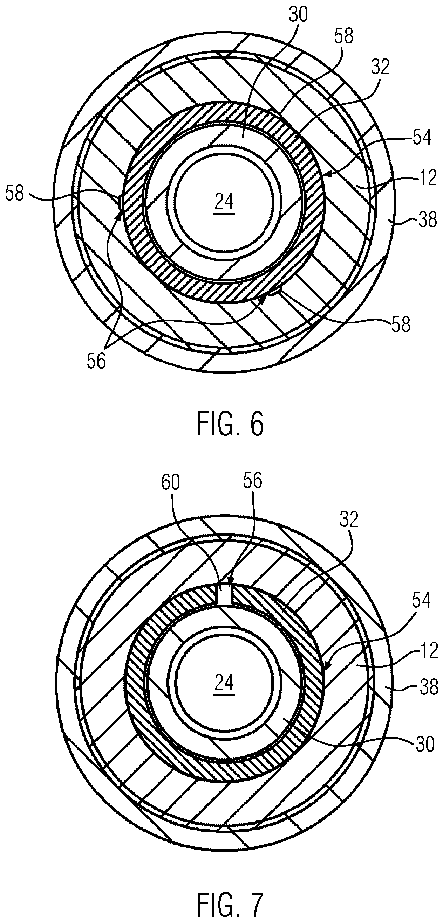

Figur 6 zeigt dabei mit Bezugszeichen 56 gekennzeichnete Strömungsdurchlässe für eine erste Variante, die durch radiale Kerben 58 innerhalb der Bohrung 54 gebildet sind. Die Kerben 58 erstrecken sich in radialer Richtung, haben allerdings lediglich eine geringe Umfangserstreckung. Es sind drei Kerben 58 auf dem Umfang verteilt vorgesehen, die in der Summe den Strömungsdurchlass in der gezeigten Kv min-Stellung des Regulierkolbens 28 einstellen. Das Kunststoff-Dichtelement 32 ist bei dieser Variante umfänglich geschlossen.

Anders verhält es sich bei dem Ausführungsbeispiel nach Figur 7. Dort ist das in Figur 6 nach Art eines geschlossenen Dichtringes ausgebildete Kunststoff-Dichtelement 32 geschlitzt. So ergibt sich eine C-förmige Gestaltung mit einem Radialschlitz 60, der den einzigen Strömungsdurchlass 56 ausbildet. Es ist ohne Weiteres vorstellbar, dass bei einer konischen Ausgestaltung der Regulierkolbenbasis 30 und/oder der Bohrung 54 dieser Schlitz abhängig von der Stellung des Dehnstoffelementes 24 vergrößert bzw. verkleinert werden kann, um den Strömungsdurchlass 56 variabel einzustellen.

Die Figuren 5, 6 und 7 zeigen die Konstellation von Regulierkolben 28 und Bohrung 54 in der Kv min-Stellung. Wie zuvor beschrieben ist der Strömungsdurchlass 56 nicht umfänglich zwischen der Bohrung 54 und dem Regulierkolben 28 ausgebildet. Vielmehr ist lediglich zumindest ein in Umfangsrichtung diskreter Abschnitt vorgesehen, der eine Strömung durchlässt. Ansonsten liegt das Kunststoff-Dichtelement 32 im Wesentlichen vollumfänglich an der Innenumfangsfläche der überwiegend kreisförmigen Bohrung 54 an. Der durch den Regulierkolben 28 in der zuvor beschriebenen Stellung gebildete Kv min-Einstellungsbereich ist in Figur 5 mit I gekennzeichnet.

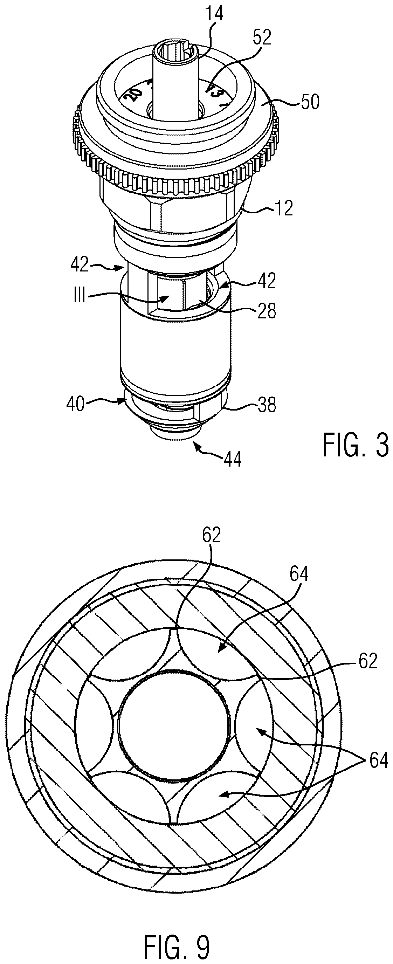

In Richtung auf die Spindel 14 vorgelagert bildet der Regulierkolben 28 einen Kv max-Einstellungsbereich aus, der mit Bezugszeichen III gekennzeichnet ist. Wie die Schnittansicht gemäß Figur 9 verdeutlicht, hat der Regulierkolben 28 eine im Wesentlichen sternförmige Querschnittsform und bildet auf dem Umfang verteilt vorgesehene Stützstellen 62 aus, zwischen denen Strömungsdurchgangsmulden 64 ausgeformt sind. Die Stützstellen 62 reichen bis zu der Innenumfangsfläche der Bohrung 54 und können sich an diesen auch zur Widerlagerung einer ggf. auftretenden Knicklast des Federelementes 34 abstützen. Die Strömungsdurchgangsmulden 54 bilden in der gezeigten Kv max-Stellung den Kv max-Strömungsdurchlass aus, der mit Bezugszeichen 66 gekennzeichnet ist. Diese Ausgestaltung ist auch bei dem Ausführungsbeispiel nach Figur 1 verwirklicht.

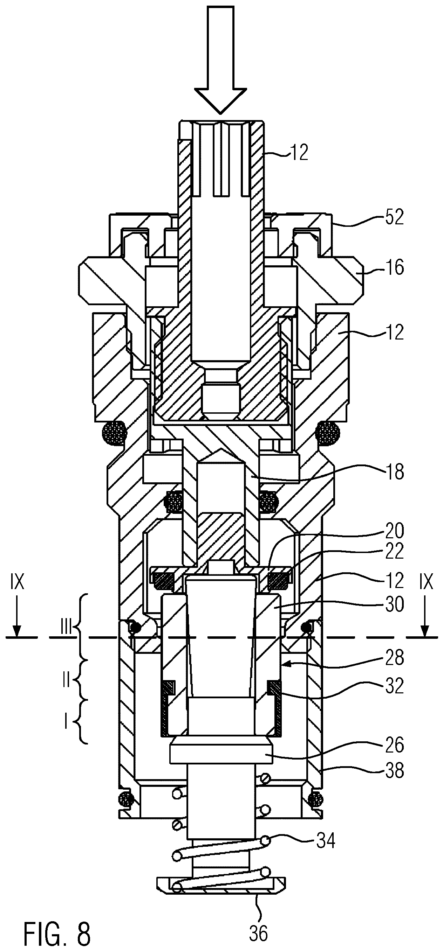

Zwischen dem mit Bezugszeichen III gekennzeichneten Kv max-Einstellungsbereich des Regulierkolbens 28 gemäß den Figuren 8 und 9 und dem Kv min-Einstellungsbereich I gemäß den Figuren 6 bis 8 befindet sich ein Reguliereinstellungsbereich II, in welchem der Strömungsdurchlass vergrößert wird. Dieser Reguliereinstellungsbereich II überstreicht die Innenumfangsfläche der Bohrung 54 aufgrund der Dehnung des Dehnstoffelementes 24.

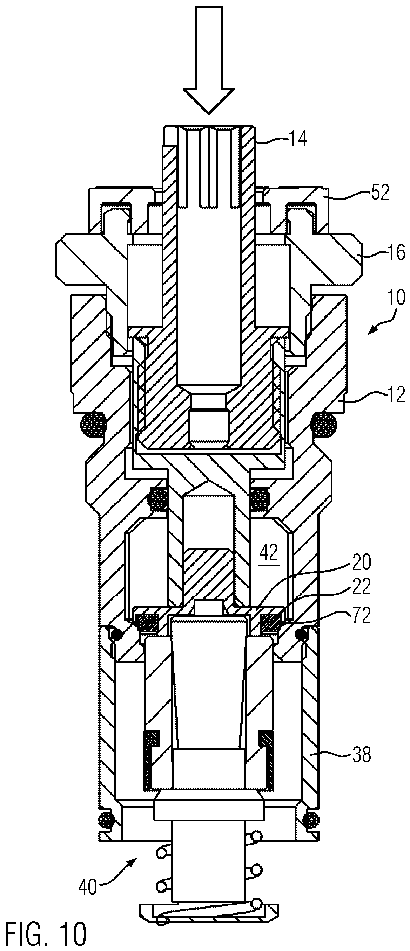

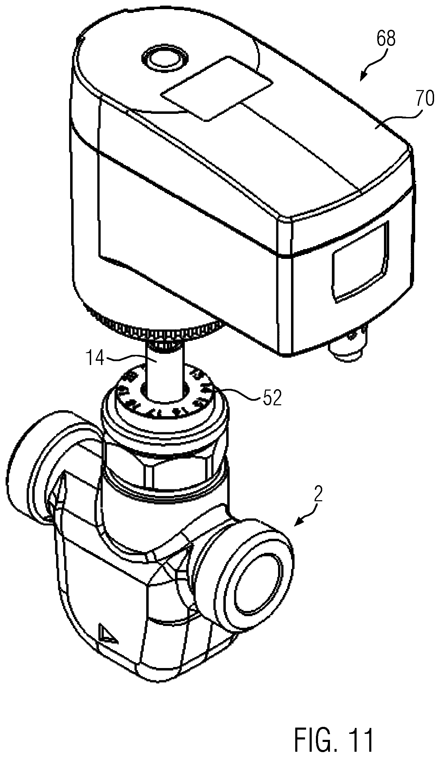

Wie ersichtlich muss die Spindel 14 gestellt werden, um ausgehend von der Kv min-Stellung zu der in den Figuren 9 und 10 gezeigten Kv max-Stellung zu gelangen (vgl. Pfeil in Figur 8). Die Kv max-Stellung entspricht dabei der Spülstellung des gezeigten Ausführungsbeispiels. Diese Spülstellung wird bevorzugt durch eine in Figur 11 gezeigten Antriebseinheit 68 eingestellt, die ein einheitliches Antriebsgehäuse 70 aufweist, welches einen nicht gezeigten elektrischen Motor, einen Speicher und eine Steuerung in sich aufnimmt. Bei einer Abwandlung kann das Antriebsgehäuse 70 lediglich den motorischen Antrieb in sich aufnehmen. Die Steuersignale und der Speicher können in einer zentralen Steuerung hinterlegt sein, die datenmäßig mit dem motorischen Antrieb, der sich innerhalb des Antriebsgehäuses 70 befindet, gekoppelt ist. In dem Antriebsgehäuse 70 kann eine autonome Energiequelle, beispielsweise eine Batterie oder ein Akkumulator vorgesehen sein.

Der Speicher ist dabei so ausgebildet, dass der Antriebseinheit in vorbestimmten Zeitintervallen, beispielsweise nach etwa 36 Stunden +/- 10 Stunden ein Signal gegeben wird, die Kv max-Stellung einzustellen, sodass die dem Ventil vorgelagerte Leitung gespült und abgestandenes Wasser abgefördert wird.

Das erfindungsgemäße Ventil bietet dabei die Möglichkeit, Volumenströme von etwa 1 - 2 m³/h beim Spülen abzulassen. Dieser Wert entspricht Kv max. Durch die besondere Ausgestaltung des Regulierkolbens 28 kann ein Kv min von etwa 0,05 m³/h eingestellt werden.

Die in der Antriebseinheit 68 vorgesehene Steuerung kann selbstverständlich auch temperaturgesteuert das Spülen auslösen und überwachen. Sie hat hierzu eine Schnittstelle für einen Temperatursensor, der die Wassertemperatur in dem dem Ventil vorgelagerten Leitungsbereich misst und überwacht.

Nach Beendigung des Spülens stellt der motorische Antrieb die zuvor allein durch das Dehnstoffelement gegebene Stellung des Regulierkolbens 28 wieder ein.

Über die Antriebseinheit oder händisch kann die in Figur 10 gezeigte Verschlussstellung erreicht werden. Hierbei wird durch den Antrieb der Spindel der Ventilteller 20 so weit nach unten gedrückt, bis die Dichtscheibe 22 an einem benachbart zu der Bohrung 54 vorgesehenen Dichtsitz 72 anliegt. Somit kann das Ventil zu Wartungsarbeiten oder zum kontrollierten abschnittsweisen Spülen einzelner Stränge eines Wasserleitungssystems für Kaltwasser abgesperrt werden.

Die Figur 10 geht dabei von einem motorischen Antrieb aus, der die Spindel 14 axial nach Art eines Stößels bewegt. Die Bewegung der Spindel erfolgt bis die Dichtscheibe 22 gegen den Dichtsitz 72 anliegt. Beim händischen Schließen des Ventils wird die Spindel gedreht. Sofern der vorher skizzierte motorische Antrieb vorgesehen ist, wird dieser zuvor entfernt. Die Spindel 14 wird über einen an dem freien Ende der Spindel 14 vorgesehenen Sechskant händisch gedreht, bis die Verschlussstellung erreicht ist.

### Bezugszeichenliste

- 2: Ventilgehäuse
- 4: Einlassöffnung
- 6: Auslassöffnung
- 8: Trennwand
- 10: Ventileinsatz
- 12: Ventileinsatzgehäuse
- 14: Spindel
- 16: Regulieroberteil
- 18: Stellelement
- 20: Ventilteller
- 22: Dichtscheibe
- 24: Dehnstoffelement
- 26: Anlagekragen
- 28: Regulierkolben
- 30: Regulierkolbenbasis
- 32: Kunststoff-Dichtelement
- 34: Federelement
- 36: Boden/Anlagefläche
- 38: Einlasshülse
- 40: Ventileinsatz-Einlassöffnung
- 42: Ventileinsatz-Auslassöffnung
- 44: Federstützhülse
- 46: Stützkragen
- 48: Stützring
- 50: Einstellrad
- 52: Skalierung
- 54: Bohrung
- 56: Strömungsdurchlass Kv min
- 58: Kerbe
- 60: Radialschlitz
- 62: Stützstelle
- 64: Strömungsdurchgangsmulde
- 66: Strömungsdurchlass Kv max
- 68: Antriebseinheit
- 70: Antriebsgehäuse
- 72: Dichtsitz
- I: Kv min-Einstellbereich
- II: Reguliereinstellungsbereich
- III: Kv max-Einstellungsbereich

## Patentansprüche

1. Ventil für die Trinkwasserinstallation mit einem Ventilgehäuse (2) mit Anschlüssen zu einer Rohrleitung und mit einem in dem Ventilgehäuse (2) beweglichen Regulierkolben (28), der mit einer an der Außenseite des Ventilgehäuses (2) freiliegenden Spindel (14) gekoppelt ist und auf der der Spindel (14) gegenüberliegenden Seite mit einem in einem Strömungsweg durch das Ventilgehäuse (2) freiliegendem thermischen Dehnstoffelement (24) zusammenwirkt, das unter Vorspannung eines Federelementes (34) gegen den Regulierkolben (28) angelegt ist und durch dessen Dehnung der Regulierkolben (28) relativ zu einer Bohrung (54) beweglich ist, wobei der Regulierkolben (28) einen Kv min-Einstellungsbereich (I) ausbildet, durch den in einer Kv min-Stellung des Regulierkolbens (28) zwischen dem Regulierkolben (28) und der Bohrung (54) durch zumindest einen an dem Regulierkolben (28) und/oder der Bohrung (54) sich radial erstreckenden Spalt (58, 60) ein Kv min-Strömungsdurchlass (56) ausgebildet ist, **dadurch gekennzeichnet,**
**dass** der in der Kv min-Stellung ausgebildete Spalt (58, 60) umfänglich nicht durchgehend ist und dass der Kv min-Strömungsdurchlass (56) einen über eine gewisse axiale Erstreckung konstanten Strömungsquerschnitt hat, wobei eine axiale Richtung einer Bewegungsrichtung des Regulierkolbens (28) entspricht,
**dass** der Regulierkolben (28) einen Kv max-Einstellungsbereich (III) mit an der Außenumfangsfläche des Regulierkolbens ausgebildeten Stützstellen (62) und dazwischenliegende Strömungsdurchgangsmulden (64) ausbildet und
**dass** in der Kv max-Stellung des Regulierkolbens (28) die Stützstellen (62) bis zu der Bohrung (54) reichen und die dazwischen vorgesehenen Strömungsdurchgangsmulden (64) einen Kv max-Strömungsdurchlass (III) ausbilden.

2. Ventil nach Anspruch 1, **dadurch gekennzeichnet, dass** der Regulierkolben (28) in seinem Kv min-Einstellungsbereich (I) ein Kunststoff-Dichtelement (32) aufweist, dessen Außenumfangsfläche in der Kv min-Stellung des Regulierkolbens (28) den Spalt (58, 60) definiert.

3. Ventil nach Anspruch 1 oder 2, **dadurch gekennzeichnet, dass** der Regulierkolben (28) in seinem Kv min-Einstellungsbereich (I) ein Kunststoff-Dichtelement (32) aufweist, dessen Außenumfangsfläche in der Kv min-Stellung des Regulierkolbens (28) zumindest teilumfänglich an einer die Bohrung (54) vorgebenden Gegenfläche anliegt.

4. Ventil nach einem der Ansprüche 1 bis 3, **dadurch gekennzeichnet, dass** der Regulierkolben (28) in seinem Kv min-Einstellungsbereich (I) ein Kunststoff-Dichtelement (32) aufweist, das einen in der Kv min-Stellung des Regulierkolbens (28) den Spalt ausbildenden Radialschlitz (60) hat.

5. Ventil nach Anspruch 1, **dadurch gekennzeichnet, dass** der Kv max-Einstellungsbereich (III) an dem Regulierkolben (28) zwischen dem Kv min-Einstellungsbereich (I) und der Spindel (14) vorgesehen ist.

6. Ventil nach einem der vorherigen Ansprüche, **dadurch gekennzeichnet, dass** die Spindel (14) in einem Ventileinsatzgehäuse (12) drehbar gelagert ist, das zumindest einen zu dem Dehnstoffelement (24) führenden ersten radialen Strömungsauslass (42) ausbildet und an seinem der Spindel (14) gegenüberliegenden Ende mit einer Einlasshülse (38) verbunden ist, die zumindest einen zweiten radialen Strömungsdurchlass (40) und einen Boden (36) ausbildet, an dem sich das Federelement (34) abstützt.

7. Ventil nach Anspruch 6, **dadurch gekennzeichnet, dass** der Boden (36) durch eine axial beweglich zu dem Ventileinsatzgehäuse (12) gehaltene Federstützhülse (44) gebildet ist, die sich an dem Ventilgehäuse (2) abstützt und für das Federelement (34) einen innen stützenden Stützkragen (46) ausbildet.

8. Ventil nach einem der vorherigen Ansprüche, **gekennzeichnet durch** einen das Dehnstoffelement (24) abstützenden Ventilteller (20), der eine Dichtscheibe (22) trägt, die in einer Verschlussstellung des Ventils an einem benachbart zu der Bohrung (54) vorgesehenen Dichtsitz (72) anliegt.

9. Ventil nach einem der vorherigen Ansprüche, **gekennzeichnet durch** einen mit der Spindel (14) in Wirkverbindung stehenden motorischen Antrieb (68), der mit einer Steuerung verbindbar ist, die einen Speicher enthält, in dem ein vorbestimmtes Spülregime hinterlegt ist, und dass die Steuerung so eingerichtet ist, dass der motorische Antrieb (68) den Regulierkolben (28) von einer voreingestellten Regulierstellung zum Spülen in die Kv max-Stellung stellt und nach Beendigung des Spülens den Regulierkolben (28) in die voreingestellte Regulierstellung zurückstellt.

10. Ventil nach Anspruch 9, **dadurch gekennzeichnet, dass** der motorische Antrieb (68), die Steuerung und der Speicher in einem einheitlichen, mit dem Ventilgehäuse (2) verbundenen Antriebsgehäuse (70) aufgenommen ist.

11. Ventil nach Anspruch 10, **dadurch gekennzeichnet, dass** das Ventilgehäuse (2) mit einem Formschlusselement und das Antriebsgehäuse (70) mit einem Formschlussgegenelement versehen ist, über welche das Antriebsgehäuse (70) verdrehfest mit dem Ventilgehäuse (2) verbindbar ist.

## Claims

1. A valve for drinking water installation, comprising a valve housing (2) with connections to a pipeline, and a regulating piston (28), which is movable in the valve housing (2) and coupled to a spindle (14) exposed on the outer side of the valve housing (2) and which cooperates, on the side opposed to the spindle (14), with a thermal expansion element (24) exposed in a flow path through the valve housing (2) and resting under the pretension of a spring element (34) against the regulating piston (28), the regulating piston (28) being movable relative to a bore (54) due to the expansion of the expansion element (24), wherein the regulating piston (28) defines a Kv min setting area (I), through which, at a Kv min position of the regulating piston (28), a Kv min flow passage (56) is formed between the regulating piston (28) and the bore (54) by at least one gap (58, 60) extending radially on the regulating piston (28) and/or the bore (54), **characterized in that** the gap (58, 60) formed in the Kv min flow passage (56) is circumferentially non-continuous and that the Kv min flow passage (56) has a constant flow cross-section over a certain axial extension, wherein an axial direction corresponds to a direction of movement of the regulating piston (28), that the regulating piston (28) defines a Kv max setting area (III) with support points (62) formed on the outer circumferential surface of the regulating piston and intermediate flow passage hollows (64), and that, at the Kv max position of the regulating piston (28), the support points (62) extend up to the bore (54) and the flow passage hollows (64) provided therebetween define a Kv max flow passage (III).

2. The valve according to claim 1, **characterized in that** the regulating piston (28) comprises a plastic sealing element (32) in its Kv min setting area (I), the outer circumferential surface of this plastic sealing element (32) defining the gap (58, 60) at the Kv min position of the regulating piston (28).

3. The valve according to claim 1 or 2, **characterized in that** the regulating piston (28) comprises a plastic sealing element (32) in its Kv min setting area (I), the outer circumferential surface of this plastic sealing element (32) abutting at least along part of its circumference against a countersurface establishing the bore (54), at the Kv min position of the regulating piston (28).

4. The valve according to one of the claims 1 to 3, **characterized in that** the regulating piston (28) comprises a plastic sealing element (32) in its Kv min setting area (I), the plastic sealing element (32) having a radial slot (60) defining the gap at the Kv min position of the regulating piston (28).

5. The valve according to claim 1, **characterized in that** the Kv max setting area (III) is provided on the regulating piston (28) between the Kv min setting area (I) and the spindle (14).

6. The valve according to one of the preceding claims, **characterized in that** the spindle (14) is rotatably supported in a valve insert housing (12), which defines at least one radial flow outlet (42) leading to the expansion element (24) and which, at its end located opposite the spindle (14), is connected to an inlet sleeve (38) defining at least a second radial flow passage (40) and a bottom (36), on which the spring element (34) rests.

7. The valve according to claim 6, **characterized in that** the bottom (36) is defined by a spring support sleeve (44), which is supported such that it is axially movable relative to the valve insert housing (12) and which rests on the valve housing (2) and defines an interiorly supporting support collar (46) for the spring element (34).

8. The valve according to one of the preceding claims, **characterized by** a valve disk (20) supporting the expansion element (24) and carrying a sealing disk (22), which, at a closing position of the valve, abuts against a sealing seat (72) provided adjacent the bore (54).

9. The valve according to one of the preceding claims, **characterized by** a motor drive (68) operatively connected to the spindle (14) and connectable to a control unit, which comprises a memory having stored therein a predetermined flushing regime, and that the control unit is configured such that the motor drive (68) will move the regulating piston (28) from a preset regulating position to the Kv max position for flushing and, when the flushing operation has been finished, reset the regulating piston (28) to the preset regulating position.

10. The valve according to claim 9, **characterized in that** the motor drive (68), the control unit and the memory are accommodated in a uniform drive housing (70) connected to the valve housing (2).

11. The valve according to claim 10, **characterized in that** the valve housing (2) is provided with a positive-locking element and the drive housing (70) is provided with a positive-locking counterelement, the drive housing (70) being connectable to the valve housing (2) via these elements, such that it is secured against rotation relative thereto.

## Revendications

1. Vanne pour installation d'eau potable comprenant un carter de vanne (2) muni de sorties vers une conduite et comprenant un piston de régulation (28) qui est mobile dans le carter de vanne (2) et est couplé à une tige (14) exposée à l'extérieur du carter de vanne (2)
et qui coopère, sur le côté opposé à la tige (14), avec un élément de dilatation thermique (24) exposé dans un trajet d'écoulement à travers le carter de vanne (2) et appliqué contre le piston de régulation (28) sous la précontrainte d'un élément formant ressort (34) et grâce à la dilatation duquel le piston de régulation (28) est mobile par rapport à un alésage (54), dans lequel le piston de régulation (28) établit une plage de réglage Kv minimum (I) grâce à laquelle un passage d'écoulement Kv min (56) est formé dans une position Kv min du piston de régulation (28) entre le piston de régulation (28) et l'alésage (54) à travers au moins un interstice (58, 60) s'étendant de manière radiale au niveau du piston de régulation (28) et/ou de l'alésage (54), **caractérisée en ce que**
l'interstice (58, 60) formé dans la position Kv min n'est pas périphériquement continu et **en ce que** le passage d'écoulement Kv min (56) présente une section d'écoulement constante sur une certaine étendue axiale, dans lequel la direction axiale correspond à la direction de déplacement du piston de régulation (28),
**en ce que** le piston de régulation (28) établit une plage de réglage Kv max (III) avec des points d'appui (62) formés sur la surface périphérique extérieure du piston de régulation et des creux de passage d'écoulement (64) situés entre ceux-ci et
**en ce que**, dans la position Kv max du piston de régulation (28), les points d'appui (62) s'étendent jusqu'à l'alésage (54) et les creux de passage d'écoulement (64) fournis entre ceux-ci forment un passage d'écoulement Kv max (III).

2. Vanne selon la revendication 1, **caractérisée en ce que** le piston de régulation (28) présente dans sa plage de réglage Kv min (I) un élément d'étanchéité en plastique (32) dont la surface périphérique extérieure définit l'interstice (58, 60) dans la position Kv min du piston de régulation (28).

3. Vanne selon la revendication 1 ou 2, **caractérisée en ce que** le piston de régulation (28) présente dans sa plage de réglage Kv min (I) un élément d'étanchéité en matière plastique (32) dont la surface périphérique extérieure est contiguë à une contre-surface définissant l'alésage (54) au moins pour une partie de sa périphérie dans la position Kv min du piston de régulation (28).

4. Vanne selon l'une quelconque des revendications 1 à 3, **caractérisée en ce que** le piston de régulation (28) présente dans sa plage de réglage Kv min (I) un élément d'étanchéité en matière plastique (32) qui présente une fente radiale (60) formant l'interstice dans la position Kv min du piston de régulation (28).

5. Vanne selon la revendication 1, **caractérisée en ce que** la plage de réglage Kv max (III) est prévue au niveau du piston de régulation (28) entre la plage de réglage Kv min (I) et la tige (14).

6. Vanne selon l'une quelconque des revendications précédentes, **caractérisée en ce que** la tige (14) est logée de manière rotative dans un carter d'insert de vanne (12) qui forme au moins une première sortie d'écoulement (42) radiale menant à l'élément de dilatation (24) et est relié, au niveau de son extrémité opposée à la tige (14), à un manchon d'entrée (38) qui forme au moins un deuxième passage d'écoulement (40) radial et un fond (36) sur lequel s'appuie l'élément formant ressort (34).

7. Vanne selon la revendication 6, **caractérisée en ce que** le fond (36) est formé d'un manchon de support de ressort (44) qui est retenu de manière mobile axialement par rapport au carter d'insert de vanne (12) et qui s'appuie sur le carter de vanne (2) et forme une collerette de support (46) supportant par l'intérieur l'élément formant ressort (34).

8. Vanne selon l'une quelconque des revendications précédentes, **caractérisée par** un disque de vanne (20) fournissant un appui à l'élément de dilatation (24) et supportant un disque d'étanchéité (22) qui, dans une position de fermeture de la vanne, est contigu à un siège d'étanchéité (72) prévu au voisinage de l'alésage (54).

9. Vanne selon l'une quelconque des revendications précédentes, **caractérisée par** un entraînement motorisé (68) qui est en liaison fonctionnelle avec la tige (14) et qui peut être relié à une commande contenant une mémoire au sein de laquelle est enregistré un régime de rinçage prédéterminé, et en ce que la commande est conçue de sorte que l'entraînement motorisé (68) fait passer le piston de régulation (28) d'une position de régulation préréglée, permettant de rincer, à la position Kv max et, à la fin du rinçage, ramène le piston de régulation (28) dans la position de régulation préréglée.

10. Vanne selon la revendication 9, **caractérisée en ce que** l'entraînement motorisé (68), la commande et la mémoire sont logés dans un carter d'entraînement (70) homogène relié au carter de vanne (2).

11. Vanne selon la revendication 10, **caractérisée en ce que** le carter de vanne (2) est muni d'un élément à verrouillage par complémentarité de forme et le carter d'entraînement (70) d'un contre-élément à verrouillage par complémentarité de forme par l'intermédiaire duquel le carter d'entraînement (70) peut être relié de manière fixe en rotation au carter de vanne (2).
